# EUROPÄISCHE PATENTANMELDUNG

(11) **EP 1 857 640 A2**
(43) Veröffentlichungstag der Anmeldung: **21.11.2007**
(21) Anmeldenummer: 07100387.5
(22) Anmeldetag: 11.01.2007
(51) Int. Cl.: F01K 23/06, C01B 33/00, C01B 33/36, C01B 13/02, C01F 7/42

(54) **Neuartiger kaskadierter Kraftwerksprozess und Verfahren zum Bereitstellen von reversibel einsetzbaren Wasserstoffträgern in einem solchen Kraftwerksprozess**

(30) Priorität: 10.05.2006 DE 102006021960; 29.10.2006 EP 06022578; 18.12.2006 EP 06126325
(71) Anmelder: Silicon Fire AG, 6045 Meggen (CH)
(72) Erfinder: Krass, Florian, 6353 Weggis (CH)
(74) Vertreter: OK pat AG

(57) **Zusammenfassung**

Die Rohölvorräte sind berechenbar zeitlich begrenzt. Bevorzugt kommen siliziumdioxidhaltige Ausgangsstoffe als Rohstoffe zum Einsatz.

## Beschreibung

Die vorliegende Anmeldung beansprucht die Prioritäten der Patentanmeldung DE 102006021960, die am 10.5.2006 beim DPMA eingereicht wurde, der Europäischen Patentanmeldung EP 06 022 578.6, die am 29.10.2006 beim EPA eingereicht wurde, sowie die Priorität der Europäischen Patentanmeldung 06 126 325.7, die am 18.12.2006 beim EPA eingereicht wurde.

Kohlenstoffdioxid (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen unter ausreichendem Sauerstoff. Seit Beginn der Industrialisierung steigt der CO₂-Anteil in der Atmosphäre deutlich an. Hauptursache hierfür sind die vom Menschen verursachten - die sogenannten anthropogenen - CO₂-Emissionen.

Das Kohlendioxid in der Atmosphäre absorbiert einen Teil der Wärmestrahlung. Diese Eigenschaft macht Kohlendioxid zu einem so genannten Treibhausgas und ist einer der Mitverursacher des Treibhauseffekts.

Aus diesen und auch aus anderen Gründen wird zur Zeit in verschiedenste Richtungen geforscht und entwickelt, um einen Weg zu finden, um die anthropogenen CO₂-Emissionen zu reduzieren. Besonders im Zusammenhang mit der Energieerzeugung, die häufig durch das Verbrennen fossiler Energieträger, wie Kohle oder Gas, erfolgt, aber auch bei anderen Verbrennungsprozessen, zum Beispiel bei der Müllverbrennung, besteht ein grosser Bedarf zur CO₂ Reduktion. Es werden pro Jahr hunderte von Millionen Tonnen CO₂ durch solche Prozesse in die Atmosphäre abgegeben.

Die zur Erzeugung von Wärme benötigten Verbrennungsstoffe erzeugen, wie eingangs erläutert, CO₂. Bisher ist niemand auf die Idee gekommen, den in ölhaltigen Sanden (SiO₂), ölhaltigen Schiefern (SiO₂ + [CO₃]²), in Bauxit oder teerhaltigen Sanden oder Schiefern, und anderen Gemischen vorhandenen Sand zu nutzen, um einerseits den CO₂ Ausstoss zu reduzieren und um andererseits aus den Produkten eines solchen neuartigen Verfahrens neue Rohstoffe und vor allem Energie zu gewinnen.

Anstatt natürlich vorkommende Gemische aus Sand und Öl in diesem neuartigen Verfahren einzusetzen, können auch kohlenwasserstoffhaltige industrielle oder natürliche Abfälle, eventuell nach Vermengung mit Sand, eingesetzt werden.

Es ist auch denkbar, statt des Ölanteils natürlichen Asphalt (auch Erdpech genannt) einzusetzen. Besonders bevorzugt ist ein Gemisch aus Asphalt mit reinem Sand oder mit Bauschutt, der Sandanteile enthält.

Es kann aber auch sogenanntes Wasserglas, eine Mischung aus Sand mit Säure oder Lauge, eingesetzt werden, wobei das Wasserglas mit mineralischen Ölen versetzt wird, um den für die Erfindung notwendigen Kohlenwasserstoffanteil zu liefern (Mikroemulsionsverfahren).

Die Erfindung kann auch besonders vorteilhaft eingesetzt werden, um zum Beispiel die nach einem Tankerunfall verschmutzten Strände und Sandbänke zu reinigen. Am besten eignet sich dazu ein Fahrzeug, vorzugsweise ein Schiff, dass mit einer oder mehreren Reaktionsbereichen gemäss Erfindung ausgestattet ist. Somit kann vor Ort der verschmutzte Sand samt Schweröl aufbereitet und in wertvolle Produkte umgewandelt werden, ohne die Umwelt zu belasten. Zur gleichen Zeit wird Energie gewonnen.

Die Vorräte an ölhaltigen Sanden (SiO₂) und Schiefern (SiO₂ + [CO₃]²) übersteigen bekanntlich die Weltölvorräte um ein Mehrfaches. Die zur Anwendung kommenden technischen Verfahren, Öl und Minerale zu trennen, sind gegenwärtig uneffektiv und zu teuer. Natürlicher Asphalt kommt an mehreren Stellen der Erde vor, wird aber im kommerziellen Massstab zur Zeit hauptsächlich in Trinidad abgebaut.

Sand ist ein natürlich vorkommendes, unverfestigtes Sedimentgestein und kommt in mehr oder weniger großer Konzentration überall auf der Erdoberfläche vor. Ein Großteil der Sandvorkommen besteht aus Quarz (Siliziumdioxid; SiO₂).

Siliziumbestandteile sind aber auch in Gneis, Glimmer, Granit, Schiefer und Bauxit vorhanden. Folglich können auch diese Gesteine eingesetzt werden.

Aufgabe der vorliegenden Erfindung ist es, solche möglichen Rohstoffe zu benennen und ihre technische Darstellung zu beschreiben. Die beim Verfahren zum Einsatz kommenden chemischen Überlegungen sind dadurch gekennzeichnet, dass sowohl das in den Sanden und Schiefern und anderen Gemischen vorhandene Silizium an einer Reaktion teilnehmen, sowie ein reversibler Wasserstoffträger bereitgestellt wird.

Kennzeichnend für die Erfindung ist der kaskadierte Ablauf einzelner Reaktionen (hier auch als Energie-Materie-Kaskaden-Kopplung oder EMK² bezeichnet). Diese einzelnen Reaktionen sind so miteinander gekoppelt, dass mit jedem Reaktionsschritt entweder die frei gesetzte Energiemenge zunimmt, oder dass mit jedem Reaktionsschritt andere (vorzugsweise höherwertige oder energiereichere) Reaktionsprodukte bereitgestellt werden. Zu diesem Zweck sind die einzelnen Reaktionsbereiche, in denen Teilreaktionen ablaufen, thermisch und/oder für die Übergabe von Reaktanten miteinander verbunden.

Andererseits ist es eine Aufgabe, alternative Lösungsansätze für das Erzeugen und Bereitstellen von Energie in Form reversibler Wasserstoffträger, die gefahrenlos transportierbar sind und das Bereitstellen des Wasserstoffs beim Verbraucher anzubieten.

Gemäss Erfindung wird in einer sogenannten 1. Teilreaktion in einem Kraftwerksprozess aus einem oder mehreren der Ausgangsstoffe Ölsand, Ölschiefer, Bauxit, Gneis, Glimmer, Granit, Schiefer, Silizium gewonnen. die Verwendung der Zahl "1" soll nicht bedeutet, dass diese Teilreaktion als erstes ausgeführt wird. Eventuell kommt im Rahmen dieser 1. Teilreaktion ein Gemenge aus einem oder mehreren der genannten Ausgangsstoffen zum Einsatz, die durch Zugabe einer Säure oder Lauge chemisch verflüssigt wurden, um zum Beispiel die Förderbarkeit durch Rohre zu verbessern. In diesem Fall kann durch das Erhitzen mittels des Primärenergielieferanten die Säure oder Lauge wieder zurückgewonnen werden.

Eine bevorzugte Ausführungsform der Erfindung nutzt unter anderem die Tatsache, dass Silizium (z.B. als Pulver bei geeigneter Temperatur) nach Zündung direkt mit reinem (kaltem) Stickstoff (z.B. Stickstoff aus der Umgebungsluft) zu Siliziumnitrid umgesetzt werden kann, weil die Reaktion stark exotherm ist. Die hierbei anfallende Wärme kann in Reaktoren, zum Beispiel in Kraftwerksprozessen, zum Einsatz kommen. Diese Umsetzung von Silizium zu Siliziumnitrid wird hier als 2. Teilreaktion bezeichnet.

Das in der erfindungsgemässen 1. Teilreaktion in Kraftwerksprozessen aus Ölsand, Ölschiefer, Bauxit, Gneis, Glimmer, Granit und/oder Schiefer entstehende Silizium ist oberflächenaktiv und könnte katalytisch (z.B. mit Magnesium und/oder Aluminium als Katalysator) mit Wasserstoff behandelt werden, wobei Monosilan entsteht. Diese Umsetzung von Silizium zu Monosilan wird hier als 3. Teilreaktion bezeichnet. Dieses Monosilan kann dem Reaktionsraum entnommen werden und an anderer Stelle ein weiteres Mal einer katalytischen Druckreaktion unterzogen werden (4. Teilreaktion). Hier lassen sich nach der Gleichung

Si + SiH₄→ (mit Kat wie Pt o.a.) → Si(SiH₄) + SiHₙ(SiH₄)ₘ + SiₙHₘ

längerkettige Silane darstellen, die sowohl in der Technik der Brennstoffzelle oder bei Motoren zur Anwendung kommen können. Diese Silane sind eine mögliche Form eines reversiblen Wasserstoffträgers.

Es kann aber in dem erfindungsgemässen Prozess auch Silizium (zum Beispiel Si-Pulver) in Stickstoff (N₂)-Atmosphäre bei Temperaturen von ca. 1.400 °C zu Siliziumnitrid Si₃N₄ nitridiert werden. Diese Art der Umsetzung ist eine Variante der 2. Teilreaktion.

Das Siliziumnitrid kann dann, zum Beispiel mittels Hydrolyse, in NH₃ umgewandelt werden. Ein Beispiel für die bei einer solchen Hydrolyse ablaufenden Reaktion ist in der folgenden Gleichung gegeben:

Si₃N₄ + 6 H₂O → 3 SiO₂ + 4 NH₃

Es entstehen also bei dieser Umsetzung NH₃ und Siliziumdioxid. Das NH₃ ist ein hervorragender Wasserstoffträger. Da die Hydrolyse von Siliziumnitrid relativ langsam abläuft, wird gemäss Erfindung das Siliziumnitrid entweder als Flocken, als Pulver oder in poröser Form eingesetzt. Dadurch ergibt sich eine deutlich grössere Oberfläche, was die Hydrolyse des Siliziumnitrids sehr viel effizienter und schneller macht. Dieser Ansatz basiert auf der Erkenntnis, dass bei Hydrolyse des Siliziumnitrids die sogenannte Oberflächenhydrolyse eine wesentliche Rolle spielt. Durch die gezielte Vergösserung der Oberflächen des Siliziumnitrids wird die Hydrolyse somit effizienter. Die Umsetzung von Siliziumnitrid zu NH₃ mittels Hydrolyse wird hier als 5. Teilreaktion bezeichnet. Besonders effektiv ist hier der Einsatz von Si₃N₄ Nanostrukturen oder -kristallen, die man zum Beispiel aus einem Sol-Gel Prozess gewinnen kann. Die Energie für den Sol-Gel Prozess kann wiederum einer der erfindungsgemässen Teilreaktionen entnommen werden.

Das Silizium, das NH₃, aber auch die Silane sind hervorragende Energielieferanten, die problemlos zu einem Verbraucher befördert werden können, um dort Wasserstoff abzuspalten. Besser geeignet ist jedoch Wasserstoffperoxid als Energielieferant. Das Wasserstoffperoxid kann in einer weiteren erfindungsgemässen Teilreaktion erzeugt werden, die an einen Kraftwerksprozess angekoppelt oder in einen solchen Prozess integriert ist. Das gleiche gilt auch für die Herstellung von Silizium, NH₃ oder Silane, die auch in einen solchen Kraftwerksprozess integriert oder an einen solchen Prozess gekoppelt werden kann.

Weitere Einzelheiten und Vorteile der Erfindung werden im Folgenden anhand von Ausführungsbeispielen beschrieben.

In den Zeichnungen sind verschiedene Aspekte der Erfindung schematisch dargestellt, wobei die Zeichnungen zeigen:

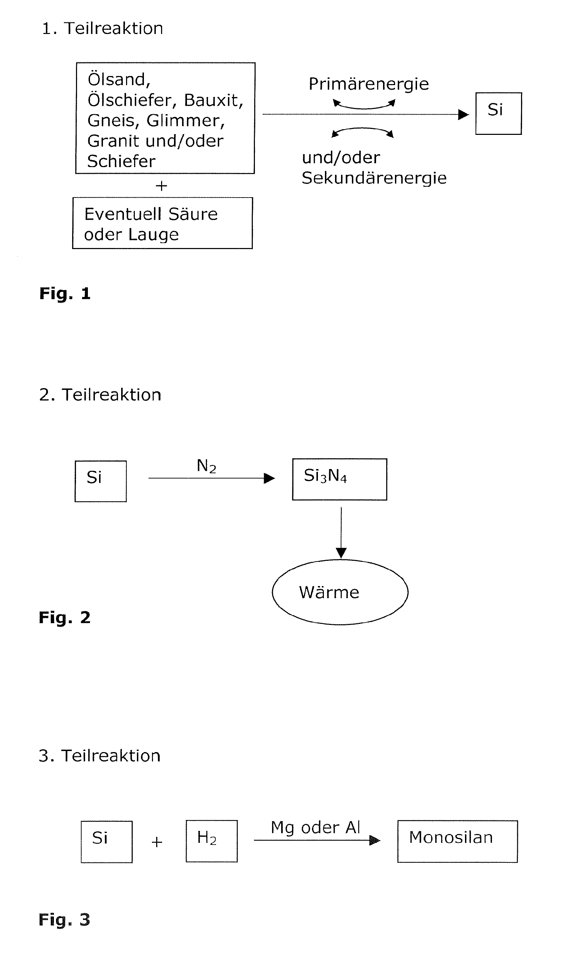

- Fig. 1:: ein Schema einer ersten erfindungsgemässen Teilreaktion;
- Fig. 2:: ein Schema einer zweiten erfindungsgemässen Teilreaktion;
- Fig. 3:: ein Schema einer dritten erfindungsgemässen Teilreaktion;

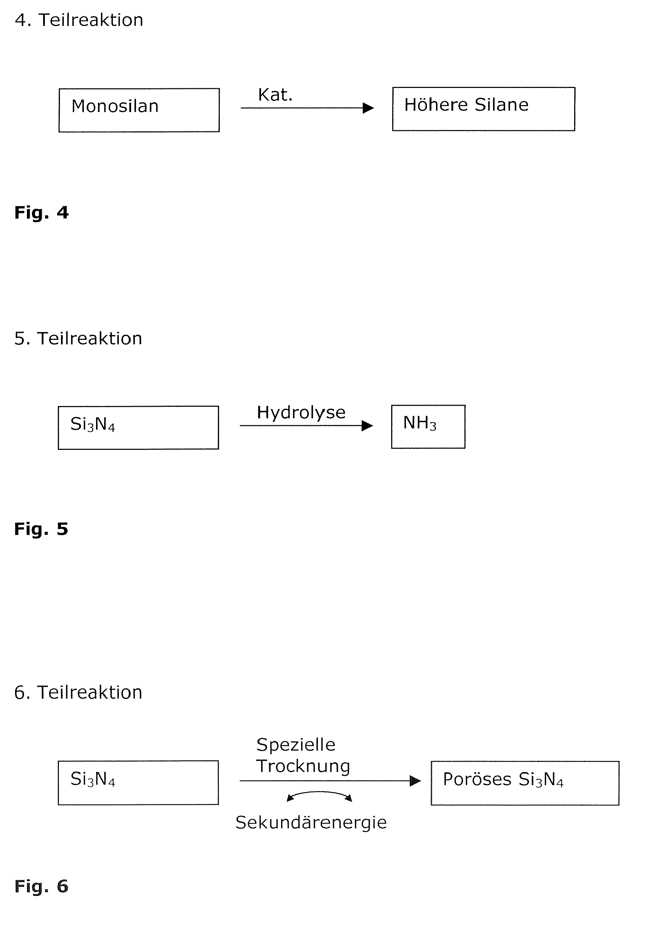

- Fig. 4:: ein Schema einer vierten erfindungsgemässen Teilreaktion;
- Fig. 5:: ein Schema einer fünften erfindungsgemässen Teilreaktion;
- Fig. 6:: ein Schema einer sechsten erfindungsgemässen Teilreaktion;

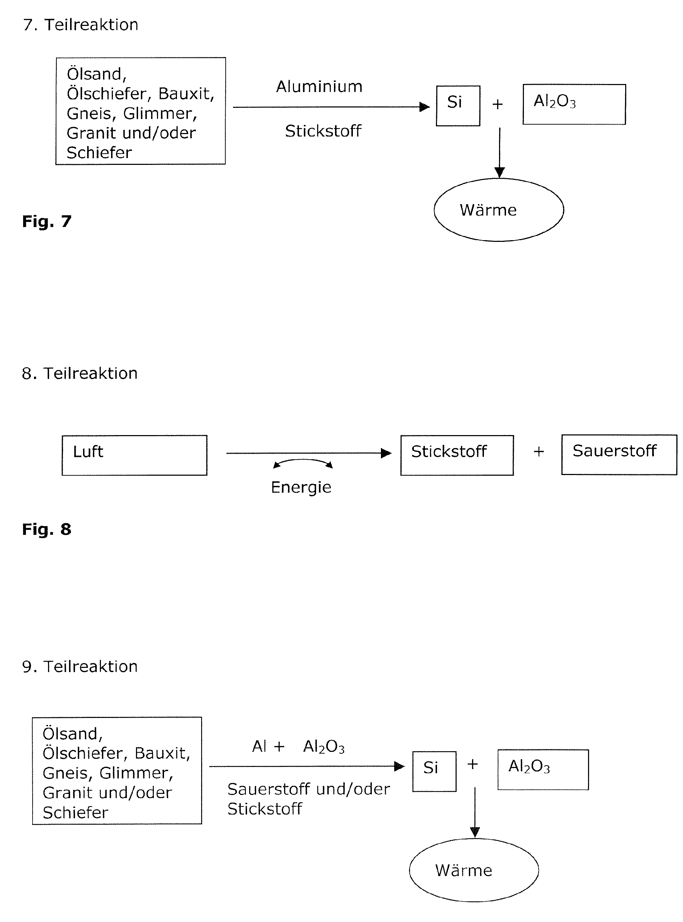

- Fig. 7:: ein Schema einer siebten erfindungsgemässen Teilreaktion;
- Fig. 8:: ein Schema einer achten erfindungsgemässen Teilreaktion;

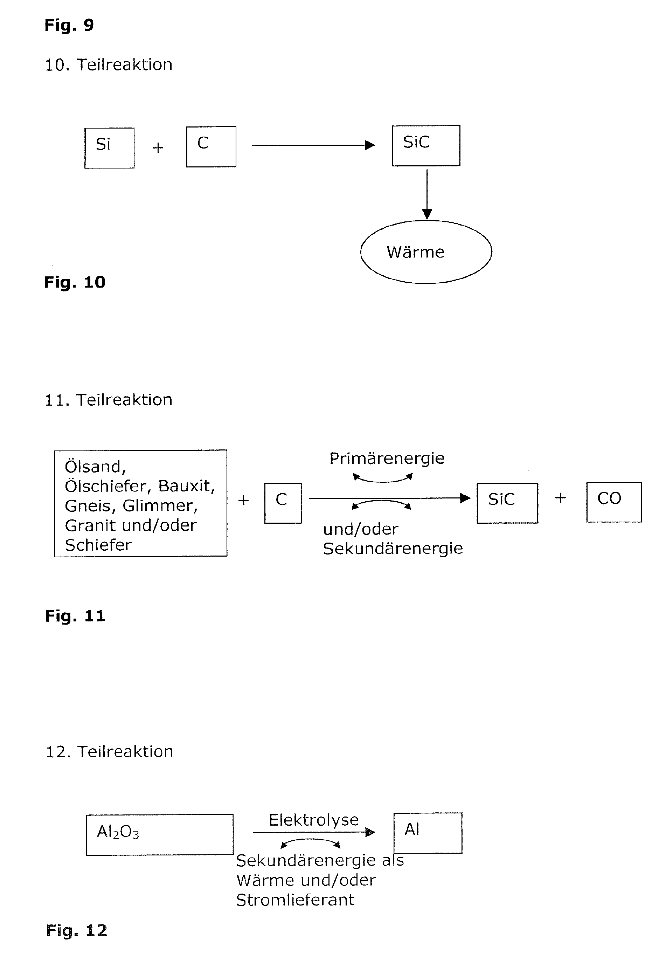

- Fig. 9:: ein Schema einer neunten erfindungsgemässen Teilreaktion;
- Fig. 10:: ein Schema einer zehnten erfindungsgemässen Teilreaktion;
- Fig. 11:: ein Schema einer elften erfindungsgemässen Teilreaktion;
- Fig. 12:: ein Schema einer zwölften erfindungsgemässen Teilreaktion;

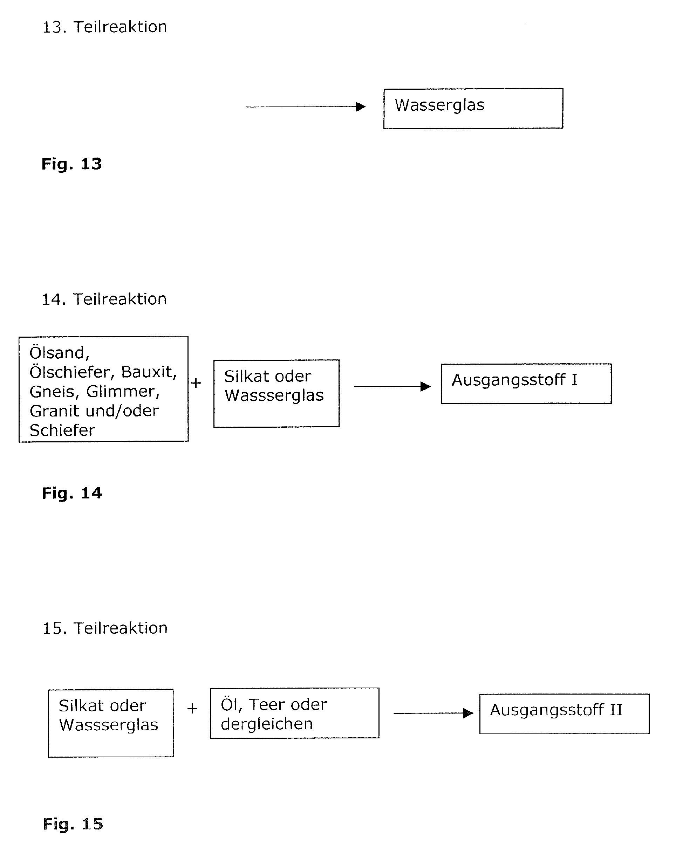

- Fig. 13:: ein Schema einer dreizehnten erfindungsgemässen Teilreaktion;
- Fig. 14:: ein Schema einer vierzehnten erfindungsgemässen Teilreaktion;
- Fig. 15:: ein Schema einer fünfzehnten erfindungsgemässen Teilreaktion;
- Fig. 16:: ein Schema einer ersten beispielhaften erfindungsgemässen Ausführungsform;
- Fig. 17:: ein Schema einer zweiten beispielhaften erfindungsgemässen Ausführungsform;
- Fig. 18:: ein Schema einer dritten beispielhaften erfindungsgemässen Ausführungsform;
- Fig. 19:: ein Schema einer vierten beispielhaften erfindungsgemässen Ausführungsform;
- Fig. 20:: ein Schema einer fünften beispielhaften erfindungsgemässen Ausführungsform;
- Fig. 21:: ein Schema einer sechsten beispielhaften erfindungsgemässen Ausführungsform.

### Detaillierte Beschreibung

Im Folgenden wird die Erfindung anhand von Beispielen beschrieben. Ein erstes Beispiel bezieht sich auf die Anwendung der Erfindung in einem Kraftwerksbetrieb, um dort den bei der Energiegewinnung anfallenden CO₂-Ausstoss zu reduzieren oder ganz zu eliminieren.

Gemäss Erfindung geht es um eine Reihe von gezielt ablaufenden chemischen Reaktionen, bei denen aus den Ausgangsstoffen (auch Edukte oder Reaktanten genannt) neue chemische Verbindungen (Produkte genannt) entstehen. Die erfindungsgemässen (Teil-)Reaktion(en) ist(sind) so ausgelegt, dass CO₂ in deutlichen Mengen verbraucht und/oder gebunden wird.

Als Ausgangstoff eingesetzt wird in einem ersten Ausführungsbeispiel zum Beispiel Sand, der mit Mineralöl, Schweröl, Teer, und/oder Asphalt - als Primärenergielieferanten - versetzt ist, oder Ölschiefer. Es können aber auch einer oder mehrere der folgenden Primärenergielieferanten eingesetzt werden: Braun-, oder Steinkohle, Torf, Holz, Gas.

Diese Ausgangsstoffe werden einer Reaktionskammer, zum Beispiel in Form eines Nachbrenners oder einer Brennkammer, zugeführt. In diese Kammer wird CO₂ eingeblasen. Dieses CO₂ kann in dem ersten Ausführungsbeispiel das CO₂-Abgas sein, das bei der Energiegewinnung aus fossilen Brennstoffen in grossen Mengen anfällt und bisher in vielen Fällen in die Atmosphäre entweicht. Vorzugsweise, aber nicht notwendigerweise, wird der Kammer zusätzlich mindestens am Anfang der 1. Teilreaktion (Umgebung-)Luft zugeführt. Anstatt der Umgebungsluft, oder zusätzlich zur Umgebungsluft kann dem Verfahren Dampf oder hyperkritisches H₂O bei über 407° C zugeführt werden. Um das hyperkritisches H₂O jedoch erfolgreich in den ablaufenden Prozess einbinden zu können, wird vorzugsweise mit einem hohen Druck in dem entsprechenden Reaktionsraum/Brennraum gearbeitet. Besonders bewährt haben sich Drücke von 150 bar und mehr. Besonders bevorzugt ist ein Druck, der bei ca. 300 bar liegt.

Weiterhin ist das Einblasen von Stickstoff an anderer Stelle im Verfahren (z.B. während der 1. Teilreaktion), respektive der Brennkammer vorzusehen. Ausserdem können bei einem oder mehreren der Teilreaktionen Katalysatoren, oder eine Art von Katalysatoren zum Einsatz kommen. Besonders geeignet ist Aluminium. Unter geeigneten Umgebungsbedingungen findet in der Kammer eine Reduktion statt, die wie folgt stark vereinfacht dargestellt werden kann: 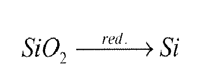 Dass heisst, es wird der in dem/den Ausgangstoff/en vorhandene Quarzanteil umgewandelt in kristallines Silizium (1. Teilreaktion).

Das zum Einsatz kommende Mineralöl der Sande übernimmt die Rolle des Primärenergielieferanten und wird im erfindungsgemässen Verfahren (d.h. während der 1. Teilreaktion) selber pyrolytisch bei Temperaturen über 1000 Grad Celsius weitgehend in Wasserstoff (H₂) und eine graphitähnliche Masse (z.B. in form von Koks) zerlegt. Es können aber auch die anderen Primärenergielieferanten zusammen mit dem/den Ausgangstoff/en in analoger Weise eingesetzt werden. Es wird also bei der ablaufenden 1. Teilreaktion der Kohlenwasserstoffkette des Primärenergielieferanten der Wasserstoff entzogen. Der Wasserstoff kann gemäss Erfindung an einen der bereits genannten reversiblen Energieträger (z.B. im Rahmen der 3. Teilreaktion) angekoppelt werden, wie im Folgenden anhand von Beispielen erläutert wird. Es kann aber auch Wasserstoff in einer oder mehreren der Teilreaktionen eingesetzt werden, der entweder direkt ins Verfahren eingebracht wird, oder der zum Beispiel aus einem gasförmigen Alkan oder aus Wasser, bzw. Wasserdampf stammt.

### Siliziumnitrid als Energieträger:

Um zum Beispiel pulver- oder flockenförmiges Siliziumnitrid bereitstellen zu können, kann das im Prozess (z.B. während oder am Ende der 1. Teilreaktion) entstehende Silizium in eine Kammer eingespritzt oder gefördert werden, oder es kann von oben her durch eine Fallstrecke hindurch abwärts fallen. In diese Kammer oder Fallstrecke wird Stickstoff (z.B. Stickstoff aus der Umgebungsluft), vorzugsweise aber reiner Stickstoff (mit 90 - 100 Vol.-% Stickstoff), eingeblasen. Das Silizium verbrennt dabei mit dem Stickstoff zu Siliziumnitrid, wobei eine Temperatur von über 1000°C, vorzugsweise über 1350°C in der Kammer herrschen sollte. Diese Reaktion (2. Teilreaktion) ist stark exotherm. Die bei der Reaktion (2. Teilreaktion) entstehende Wärmemenge (als Sekundärenergie bezeichnet) kann entweder eingesetzt werden, um weitere Ausgangstoff(e) zu erhitzen (in diesem Fall wird die frei werdende Wärmemenge der 2. Teilreaktion eingesetzt, um die 1. Teilreaktion mit ausreichender Energie zu versorgen, z.B. falls der ursprünglich zugegebene Primärlieferant verbraucht wurde), oder die Wärmemenge kann aus dem Prozess (2. Teilreaktion) ausgekoppelt werden, um kaskadenartig weitere endotherme Prozesse (z.B. die 6. Teilreaktion) mit Energie zu versorgen. Zusätzlich oder alternativ kann die anfallende Wärmemenge aber auch zum Erhitzen eines Mediums (zum Beispiel Wasser) und somit zum Antreiben einer Gasturbine oder Dampfturbine (konventionelle Energiegewinnung) eingesetzt werden.

Poröses Siliziumnitrid kann zum Beispiel dadurch hergestellt werden, dass man das Siliziumnitrid unter extremen Bedingungen trocknet. Bevorzugt ist ein Ansatz, bei dem zur Trocknung eine Art Autoklav benutzt wird, in dem erhöhte Temperatur und Druck herrschen. Die notwendige Wärmemenge (als Sekundärenergie bezeichnet) kann wiederum aus den bereits beschriebenen exothermen Prozessen (z.B. aus der 2. Teilreaktion) gewonnen werden. Der Druck und die Temperatur sollten so gewählt werden, dass die Phasengrenze zwischen Gas und Flüssigkeit aufgehoben wird, bevor es dann zu einer Abkühlung respektive Trocknung kommt. In diesem Prozess entsteht poröses Siliziumnitrid (6. Teilreaktion). Die 6. Teilreaktion kann aber auch so verändert werden, dass in einem Sol-Gel Prozess Siliziumnitrid-Nanostrukturen oder -kristalle entstehen, die als reversibler Energiespeicher oder als Ausgangsstoff zur Bereitstellung von NH₃ dienen können.

In einem zweiten Ausführungsbeispiel wird die Erfindung im Zusammenhang mit einem Pyrolyseverfahren der Firma Pyromex AG, Schweiz, angewendet. Die vorliegende Erfindung kann aber auch als Ergänzung oder Alternative zu dem sogenannten Oxyfuel-Verfahren eingesetzt werden. So kann zum Beispiel mittels der vorliegenden Erfindung eine Energie-Materie-Kaskaden-Kopplung (EMK²) nach folgendem Ansatz durchgeführt werden. In Abwandlung des Oxyfuel-Verfahrens wird unter Zugabe von Aluminium, vorzugsweise von flüssigem oder pulverförmigem Aluminium (dieses Aluminium kann zum Beispiel mittels einer 12. Teilreaktion erzeugt werden), und unter Verbrennung von Ölsand (statt Öl oder Kohle) zuerst mit Sauerstoff (O₂), dann vorzugsweise aber mit Stickstoff (N₂) und ggf. Aluminium, zusätzliche Hitze erzeugt (Wackerunfall) (7. Teilreaktion). Hier kann aber auch aufgrund der grossen Wärme, die bei der exothermen 7. Teilreaktion entsteht, das Öl oder die Kohle als Primärenergielieferant weggelassen werden.

Bei der 7. Teilreaktion entzieht das Aluminium dem Siliziumdioxid den Sauerstoff und wird dabei zu Aluminiumoxid oxidiert. Diese Teilreaktion funktioniert besonders gut, wenn kein oder nur wenig Sauerstoff von aussen eingebracht wird, da der Sauerstoff sofort eine dünne Haut auf der Aluminiumoberfläche erzeugt und damit das Aluminium quasi passiviert. Daher ist eine Ausführungsform besonders bevorzugt, bei der im Reaktionsbereich mindestens temporär eine Stickstoffatmosphäre vorgegeben wird.

Im Bedarfsfall der Stickstoffkopplung an Siliziumverbindungen, wird vorzugsweise die reine Stickstoffatmosphäre aus Umgebungsluft durch (aus der Propannitrierung bekannten) Verbrennung des Sauerstoffanteils der Luft mit Propangas erreicht. Es gibt aber auch andere Wege, um eine Trennung von Sauerstoff und Stickstoff zu erreichen. Als weitere mögliche Verfahren sind das Hohlfasermembran-Verfahren, das klassische Linde-Verfahren, oder ein Verfahren genannt, das mit einer Perowskit-Membran arbeitet. Das Bereitstellen des Stickstoffs wird als 8. Teilreaktion bezeichnet.

Gemäss Erfindung kann Aluminium zum Einsatz kommen, wie bereits erwähnt. Eine wirtschaftliche Gewinnung von Aluminium ist zur Zeit nur aus Bauxit möglich. Bauxit enthält ca. 60 Prozent Aluminiumoxid (Al₂O₃), ca. 30 Prozent Eisenoxid (Fe₂O₃), Siliziumoxid (SiO₂) und Wasser. D.h., das Bauxit ist typischerweise stets mit dem Eisenoxid (Fe₂O₃) und dem Siliziumoxid (SiO₂) "verunreinigt".

Al₂O₃ lässt sich wegen der extrem hohen Gitterenergie nicht auf chemischem Wege zu Aluminium reduzieren. Technisch gelingt die Herstellung von Aluminium aber durch die Schmelzflusselektrolyse (Kryolith-Tonerde-Verfahren) von Aluminiumoxid Al₂O₃. Das Al₂O₃ wird zum Beispiel durch das Bayer-Verfahren gewonnen. Beim Kryolith-Tonerde-Verfahren wird das Aluminiumoxid mit Kryolith (Salz: Na₃[AlF₆]) geschmolzen und elektrolysiert. Um nicht bei hohen Schmelztemperaturen des Aluminiumoxids von 2000°C arbeiten zu müssen, wird das Aluminiumoxid in einer Schmelze von Kryolith gelöst. Im Verfahren liegt damit die Arbeitstemperatur nur bei 940 bis 980°C.

Bei der Schmelzflusselektrolyse entsteht aus dem Al₂O₃ an der Kathode flüssiges Aluminium und an der Anode Sauerstoff. Als Anoden kommen Kohleblöcke (Graphit) zum Einsatz. Dieses Anoden brennen durch den entstehenden Sauerstoff ab und müssen dauernd erneuert werden.

Alternativ kann ein Plasma, das elektrisch leitend ist, als Anode eingesetzt werden. Damit würde die konventionellen Anoden ersetzt durch eine energetische Anode. Das Plasma kann vorzugsweise in einem Bereich oberhalb der Wanne durch einen geeignet Anordnung und Ansteuerung von Elektroden erzeugt werden.

Es wird als ein wesentlicher Nachteil des Kryolith-Tonerde-Verfahrens angesehen, dass es wegen der hohen Bindungsenergie des Aluminiums sehr energieaufwändig ist. Problematisch für die Umwelt ist die teilweise stattfindende Bildung und Emission von Fluor.

Beim erfindungsgemässen Verfahren (9. Teilreaktion) kann das Bauxit und/oder das Aluminiumoxid dem Verfahren zugefügt werden, um eine Kühlung des Prozesses zu erreichen. Durch das Bauxit und/oder das Aluminiumoxid kann man die überschüssige Wärmeenergie im System in den Griff bekommen. Dies geschieht analog zu dem Verfahren, wo einer Eisenschmelze in einem Hochofen Eisenschrott zur Kühlung zugeführt wird, wenn die Eisenschmelze zu heiß wird. Zu diesem Zweck kann z.B. Bauxit in Blöcken, die zum Beispiel vorher mit einem Shredder (Steinmühle) in die entsprechende Grösse zerkleinert wurde, in den Reaktionsraum verbracht werden. Durch einen geeigneten Regelkreis, der die Temperatur im Reaktionsraum misst (z.B. mittels optischer Sensoren), kann bei Überschreiten der gewünschten Temperatur im Reaktionsraum weiteres Bauxit und/oder das Aluminiumoxid "nachgeworfen" werden.

Hilfsweise kann Kryolith eingesetzt werden, falls das Verfahren ausser Kontrolle zu geraten droht (siehe Wacker Unfall), um so im Sinne einer neuartigen kryolith-basierten Notkühlung die Temperatur im System zu reduzieren. Besser geeignet ist aber eine Edelgas-Notflutanlage, die im Notfall (oder bevor dieser eintritt), den Reaktionsraum mit Edelgas (vorzugsweise Argon) flutet. Diese Edelgas-Notflutanlage kann bei jeder der Teilreaktionen eingesetzt werden.

Weitere Details zu den beschriebenen chemischen Abläufen und Energieprozessen sind den folgenden Seiten zu entnehmen.

Quarzsand lässt sich mit flüssigem oder aber auch pulverförmigem Aluminium gemäss dem Lehrbuch Holleman-Wiberg exotherm zu Silizium und Aluminiumoxid (als Nebenprodukt) umsetzen (7. Teilreaktion):

3 SiO₂ + 4 Al (I) → 3 Si + 2 Al₂O₃ ΔH = - 618.8 kJ/Mol

(exotherm)

Silizium verbrennt mit Stickstoff zu Siliziumnitrid bei 1350°C. Die Reaktion ist wiederum exotherm (2. Teilreaktion): 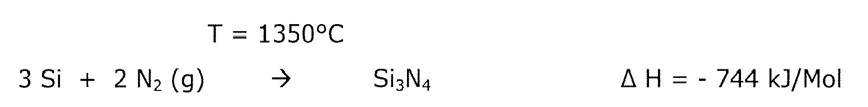 (exotherm)

Silizium reagiert mit Kohlenstoff leicht exotherm zu Siliziumcarbid (10. Teilreaktion):

Si + C → SiC Δ H = - 65.3 kJ/Mol

(exotherm)

Andererseits lässt sich Siliziumcarbid direkt aus Sand und Kohlenstoff bei rund 2000°C endotherm gewinnen (11. Teilreaktion): 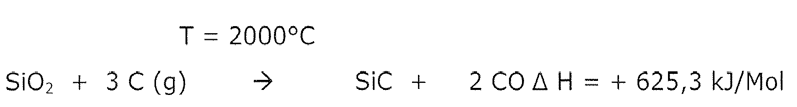 (endotherm)

Dieser endotherme Prozess zur Gewinnung von Siliziumcarbid kann zum Beispiel mit der Wärme (Sekundärenergie) gespeist werden, die beim Umsetzen von Siliziumdioxid mit Aluminium (7. Teilreaktion) und/oder Stickstoff (2. Teilreaktion) anfällt. Die Gewinnung von Siliziumcarbid (10. oder 11. Teilreaktion) kann im gleichen Reaktionsraum oder in einem nachgeschalteten oder nebengeordneten Reaktionsraum erfolgen.

Um aus dem Nebenprodukt Bauxit, resp. Aluminiumoxid Al₂O₃, wieder Aluminium zurückzugewinnen (12. Teilreaktion), elektrolysiert man flüssiges Al₂O₃ (Schmelzpunkt 2045°C) ohne Kryolithzugabe zu Aluminium und Sauerstoff. Die 12. Teilreaktion ist stark endotherm und kann zur Kühlung (siehe z.B. 9. Teilreaktion) der exothermen Reaktionen herangezogen werden. Zu diesem Zweck können die entsprechende Reaktionen thermisch miteinander gekoppelt werden. D.h., dass auch dieser endotherme Prozess zur Rückgewinnung von Aluminium zum Beispiel mit der Wärme gespeist werden kann, die beim Umsetzen von Siliziumdioxid mit Aluminium und/oder Stickstoff anfällt. Zusätzlich zur Wärme braucht es aber elektrischen Strom, um die hohe Gitterenergie des Al₂O₃ zu "überwinden".

2 Al₂O₃ (I) → 4 Al (I) + 3 O₂ (g) ΔH = +1676,8 kJ/Mol

(endotherm)

Herstellung der Silane:
Magnesium reagiert mit Silizium zu Magnesiumsilicid:

   2 Mg + Si → Mg₂Si
Magnesiumsilicid reagiert mit Salzsäure zu Monosilan SiH4 und
Magnesiumchlorid:

   Mg₂Si + 4 HCl (g) → SiH₄ + 2 MgCl₂

Dieser Syntheseweg funktioniert auch mit Aluminium. Als Zwischenprodukt entsteht demzufolge Aluminiumsilicid Al₄Si₃. Höhere Silane sind möglicherweise nur über die Polymerisation von SiCl₂ mit SiCl₄ und durch anschliessende Umsetzung mit LiAlH₄ zugänglich, wie im Stand der Technik dokumentiert.

Gemäss Erfindung werden die Monosilane vorzugsweise aber nach dem als 3. Teilreaktion bezeichneten Verfahren hergestellt. Der Weg über Aluminiumsilicid oder Magnesiumsilicid ist als Alternative zu verstehen.

Im Folgenden werden weitere wesentliche Aspekte der Erfindung beschrieben.

Um den Einsatz des Primärenergielieferanten effizienter zu gestalten, kann der Primärenergielieferant, falls er nicht bereits mit den Ausgangstoff/en (Sand, Bauxit, Schiefer, Gneis, Glimmer und/oder Granit) gemischt ist, separat vorgeheizt werden. So kann man zum Beispiel Rohöl zum Sieden bringen, bevor es mit dem/den Ausgangstoff/en gemischt wird.

Anstatt eines Primärenergielieferanten, oder zusätzlich zu dem Primärenergielieferanten, kann der Ofen mit externen oder internen Heizmitteln versehen sein, um die für das Starten der Reaktionen (z.B. 1. Teilreaktion) notwendige Wärme dem System zuführen zu können. Besonders geeignet sind sogenannte Induktionsöfen. Es ist aber auch möglich, den erfindungsgemässen Prozess (z.B. die 1. Teilreaktion) an einen konventionellen Kraftwerksprozess zu koppeln, der mit fossilen Brennstoffen (z.B. Steinkohle) arbeitet. In diesem Fall wird mindestens ein Teil der Abwärme, die im konventionellen Kraftwerksprozess entsteht, verwendet, um den/die Ausgangsstoffe/e zu erhitzen.

In einer weiteren Ausführungsform der Erfindung wird das Umsetzen des/der Ausgangstoff/e initiiert, indem Silizium (zum Beispiel in Pulverform) mit Stickstoff und/oder Aluminium (in Pulverform oder flüssig) in Verbindung gebracht wird. Das Silizium, das hier zum Einsatz kommt, kann anfänglich in einer 1. Teilreaktion gewonnen worden sein. Am Ende der 1. Teilreaktion kann ein Teil des entstandenen Siliziums gelagert werden, um später die erfindungsgemässen Kaskadenprozesse nicht mehr mit einem Primärenergielieferanten starten zu müssen, der wiederum CO₂-erzeugt.

Um das CO₂ nicht in die Umwelt abgeben zu müssen, das beim Verbrennen des Primärenergielieferanten mit dem Sauerstoff am Anfang des Prozesses entsteht, können die Rauchgase, die bei diesem Prozess entstehen, über eine Rückführungsleitung oder einen Rückführungskanal wieder in den Reaktionsraum gebracht werden. Besonders geeignet ist ein Einbringen des Rauchgases, so dass der Sand, Bauxit, Schiefer, Gneis, Glimmer oder Granit von dem Rauchgas umströmt oder durchströmt werden. Erst wenn dann der kohlenwasserstoffhaltige Primärenergielieferant in der 1. Teilreaktion "verbraucht" ist, kann das Rauchgas in einen Kühlturm oder in nachgeschaltete Reinigungsanlagen (zum Beispiel eine Entschwefelungsanlage) oder einen Filter geschickt werden.

Es kann, wie eingangs angedeutet, aber auch sogenanntes Wasserglas eingesetzt werden. Wasserglas ist ein wasserlösliches Alkalisilikat. Es sind glasartige, also amorphe, nicht kristalline Verbindungen, die typischerweise die folgende Zusammensetzung haben: M₂O · n SiO₂ mit n = 1 bis 4. Bisher werden häufig Natrium- und Kaliumsilikate technisch eingesetzt. Gemäss Erfindung können sowohl Natriumsilikat, Kaliumsilikat, aber auch Alumosilikat (auch Aluminosilikate genannt) oder Mischungen aus zwei oder mehr dieser Silikate eingesetzt werden.

Da sich Aluminium chemisch ähnlich verhält wie Silizium, ist eine Kombination der Prozesse wo Siliziumverbindungen und Aluminiumverbindungen zum Einsatz kommen ganz besonders vorteilhaft. Besonders bevorzugt ist zum Beispiel der Einsatz von Alumosilikaten, die SiO₂ und Al₂O₃ umfassen.

Das Bereitstellen der entsprechenden Silikate und/oder das Herstellen des Wasserglases wird als 13. Teilreaktion bezeichnet.

Die Silikate oder das Wasserglas an sich können als Ausgangsstoff für die erfindungsgemässen Verfahren dienen, oder sie können zum Beispiel mit Sand, oder den anderen Ausgangsstoffen, gemischt werden (14. Teilreaktion), um einen besser geeigneten Ausgangsstoff (Ausgangsstoff I genannt) z.B. für die 2. Teilreaktion zu erhalten.

Silikat oder das Wasserglas kann auch mit einem oder mehreren der Primärenergielieferanten (z.B. mineralischen Ölen) eine Mischung hergestellt (15. Teilreaktion) und eingesetzt werden, um den für die Erfindung notwendigen Kohlenwasserstoffanteil zum Starten der Prozesse zu liefern und um reaktionsfördernde oder beschleunigende Reaktanten bereitzustellen (Ausgangsstoff II genannt).

Wie eingangs beschrieben, sind die fossilen Brennstoffe, die in Kraftwerken verbrannt werden mit Schwefelrückständen belastet. Gemäss der Europäischen Patentanmeldung 06 126 325.7 kann nun H₂O₂ als Energieträger in einem auf fossilen Brennstoffen basierenden Kraftwerksprozess bereit gestellt werden.

Da reines (= wasserfreies) H₂O₂ instabil ist und spontan explodieren kann, z.B. wenn es mit Metallen in Berührung kommt, gelangt es gemäss Erfindung in maximal siebzigprozentiger Lösung in Wasser (in wässriger Lösung) in den Umlauf. Dieser Grenzwert von 70% wird hier als kritische Konzentrationsgrenze bezeichnet.

Diese Lösung wird gemäss Erfindung so gewählt, dass die Konzentration von H₂O₂ unterhalb der kritischen Konzentrationsgrenze liegt. Dann erfolgt der Transport dieser Lösung zu einem Verbraucher (Tankstelle, Endverbraucher). Durch Abspalten von Wasserstoff und/oder Sauerstoff aus der Lösung kann beim Verbraucher durch Verwenden des Wasserstoffs und/oder Sauerstoffs als Energielieferant und/oder Treibstoff Energie erzeugt werden.

Beim Umsetzen zu Peroxoschwefelsäure wird vorzugsweise Sauerstoff eingesetzt, der entweder aus der (Umgebungs-)Luft, aus CO₂-Abgas des Kraftwerksprozess, oder aus einem Siliziumdioxid-Reduktionsprozess (1. Teilreaktion) entnommen wird, wie weiter oben beschrieben.

Das H₂O₂ eignet sich besonders gut als Energielieferant oder Kraftstoff.

Der Transport der reversibel einsetzbaren Wasserstoffträger, die gemäss Erfindung hergestellt wurden, zu einem Verbraucher kann auf verschiedene Art und Weise erfolgen (z.B durch ein Transportfahrzeug), wobei dieser Transport absolut problemlos ist, da die Wasserstoffträger relativ unkritisch in der Handhabung sind.

Am Ort des Verbrauchs kann Wasserstoff und/oder Sauerstoff vom reversibel einsetzbaren Wasserstoffträger abgespalten werden. Der Wasserstoff kann dann zum Beispiel in einer Brennstoffzelle eingesetzt werden.

In den folgenden Abschnitten werden verschiedene bevorzugte Ansätze für die technische Umsetzung der Erfindung mit Bezugnahme auf schematische Zeichnungen erläutert. Dabei sei angemerkt, dass die Darstellungen der Reaktionsbereiche in Form von Brennkammern oder -öfen lediglich als Beispiele zu verstehen sind. Es liegt auf der Hand, dass die erfindungsgemässen Verfahren auch in anderes ausgestalteten Brennkammern oder -öfen eingesetzt werden können.

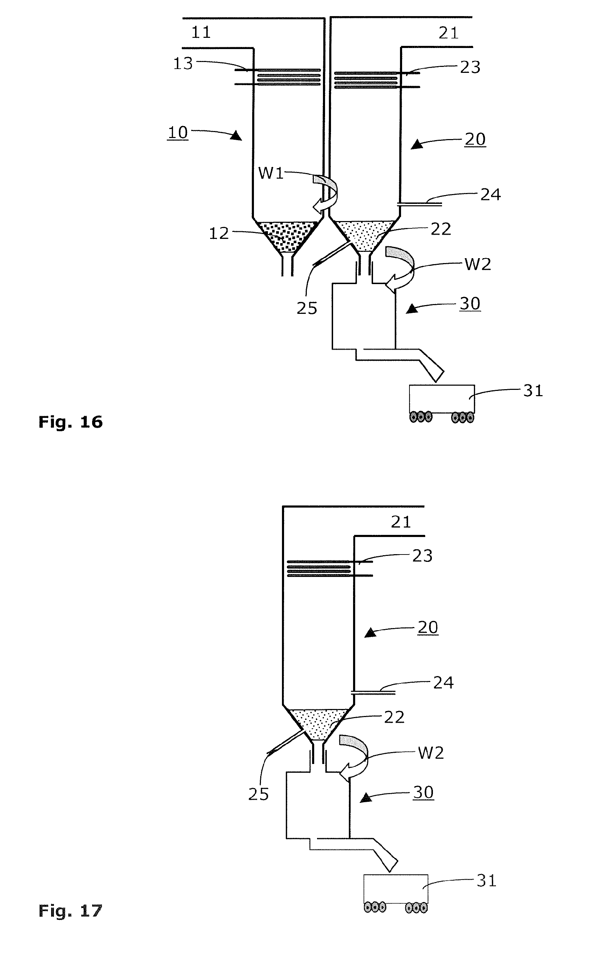

In Fig. 16 ist eine erste Ausführungsform gezeigt. Wie in Fig. 16 zu erkennen ist, sind zwei vertikal arbeitende Brennöfen 10 und 20 (z.B. Hochöfen) nebeneinander angeordnet. Der erste Brennofen 10 hat einen Austrittsbereich 11 und der zweite Brennofen 20 hat einen Austrittsbereich 21 für die jeweils entstehenden Abgase (Rauchgas). Der erste Brennofen 10 wird mit einem fossilen Brennstoff 12 (z.B. Steinkohle) beschickt und der fossile Brennstoff wird mit Sauerstoff (z.B. Luftsauerstoff) verbrannt. Bei diesem an sich bekannten Verfahren wird eine grosse Wärmemenge frei, die zum Teil über einen Wärmetauscher 13 an ein Medium (z.B. Wasser) übergeben wird, um mit dem entstehenden Wasserdampf Turbinen anzutreiben und somit Strom zu gewinnen.

Gemäss Erfindung laufen die verschiedenen Reaktion kaskadiert ab. Im gezeigten Ausführungsbeispiel erfolgt eine Wärmekopplung mit dem zweiten Brennofen 20, d.h. die beiden Öfen 10 und 20 sind thermisch direkt oder indirekt miteinander gekoppelt, was in Fig. 16 durch den Pfeil W1 angedeutet ist.

Die thermische Kopplung kann bei dieser und den anderen Ausführungsformen dadurch realisiert sein, dass beide Öfen Wand an Wand stehen. Die Kopplung kann aber auch über eine geeignete passive (z.B. mittels Wärmeleiter) oder aktive Wärmebrücke (z.B. mittels eines Wärmetauschers und eines entsprechenden Transportmediums) erfolgen.

Im zweiten Brennofen 20 wird einer der Siliziumdioxid enthaltenden Ausgangsstoffe 22 durch die vom ersten Ofen 10 bereitgestellt Wärmemenge W1 erhitzt. D.h., die im ersten Ofen 10 ablaufende Reaktion dient quasi als Primärenergielieferant für eine 1. Teilreaktion der Erfindung. Bei dieser 1. Teilreaktion wird das Siliziumdioxid umgesetzt zu Silizium. Durch eine Lanze 24 oder ein gleichwirkendes Mittel kann zum Beispiel Luft mit dem üblichen Stickstoffanteil (oder reiner Stickstoff) in den Ofen 20 eingebracht werden. Es ist offensichtlich, das der Ort der Einbringung auch anders gewählt werden kann. Das Silizium reagiert mit dem Stickstoff zu Siliziumnitrid (siehe 2. Teilreaktion). Diese Reaktion ist stark exotherm und es kann die entstehende Wärmemenge zum Teil oder ganz über einen Wärmetauscher 23 an ein Medium (z.B. Wasser) übergeben werden, um mit dem entstehenden Wasserdampf Turbinen anzutreiben und somit Strom zu gewinnen.

Besonders bevorzugt ist eine Variante der 1. Ausführungsform wo diese Sekundärwärme wiederum verwendet wird, um eine weitere Teilreaktion zu unterstützen oder zu ermöglichen. So kann zum Beispiel, wie in Fig. 16 angedeutet, ein Reaktionsbereich 30 vorhanden sein, der das entstehende Siliziumnitrid aus der 2. Teilreaktion aufnimmt und unter Zufuhr von Hitze und/oder weiteren Reaktanten und/oder Druck zu porösem Siliziumnitrid, Siliziumflocken oder Siliziumpulver umwandelt, das ein deutliche grösseres Volumen und eine deutlich grössere Oberfläche aufweist. Diese 6. Teilreaktion kann durch eine geeignete thermische Kopplung durch die Sekundärwärme der 2. Teilreaktion unterstützt oder ermöglicht werden, was in Fig. 16 durch den Pfeil W2 angedeutet ist.

Das Siliziumnitrid kann, wie in Fig. 16 durch einen Güterwagon 31 angedeutet, abtransportiert werden.

CO₂ kann (dieser Schritt ist optional) in den Ofen 20 eingebracht werden. Entweder kann man das CO₂ aus dem Abgasbereich 11 des 1. Ofens 10 in den 2. Ofen 20 führen, oder es kann CO₂ aus der Umgebungsluft eingebracht und reduziert, d.h. "unschädlich" gemacht werden.

In Fig. 17 ist eine zweite Ausführungsform gezeigt. Wie in Fig. 17 zu erkennen ist, ist ein vertikal arbeitender Brennofen 20 vorgesehen. Im Brennofen 20 wird einer der Siliziumdioxid enthaltenden Ausgangsstoffe 22 durch das Verbrennen eines Primärenergielieferant (z.B. fossile Brennstoffe Öl und/oder Teer) erhitzt.

Bei dieser 1. Teilreaktion der Erfindung entsteht unter anderem Silizium. Analog zum ersten Ausführungsbeispiel kann durch das Einbringen von Stickstoff Siliziumnitrid und Wärme entstehen. In Abwandlung dieses Prozesses kann aber auch das Silizium mit Kohlenstoff zu SiC reagieren (siehe 10. Teilreaktion). Der Kohlenstoff kann aus den fossilen Brennstoffen oder aus CO₂ stammen, das optional in den Ofen 20 eingebracht werden kann (z.B. durch eine Zufuhr 25). Diese Teilreaktion verläuft auch exotherm, gibt aber deutlich weniger Wärme ab als die 2. Teilreaktion.

Auch bei der 2. Ausführungsform kann, wie erwähnt, CO₂ in den Ofen 20 eingebracht werden.

Besonders bevorzugt ist eine Variante der 2. Ausführungsform wo diese Sekundärwärme W2 wiederum verwendet wird, um eine weitere Teilreaktion zu unterstützen oder zu ermöglichen. So kann zum Beispiel, wie in Fig. 17 angedeutet, ein Reaktionsbereich 30 vorhanden sein, der das entstehende Siliziumcarbid aus der 10. Teilreaktion aufnimmt und unter Zufuhr von Hitze und/oder weiteren Reaktanten und/oder Druck trocknet, sintert oder anderweitig veredelt. Diese weitere Reaktion kann durch eine geeignete thermische Kopplung durch die Sekundärwärme der 10. Teilreaktion unterstützt oder ermöglicht werden, was in Fig. 17 durch den Pfeil W2 angedeutet ist.

Das Siliziumcarbid oder das veredelte Siliziumcarbid kann, wie in Fig. 17 durch einen Güterwagon 31 angedeutet, abtransportiert werden.

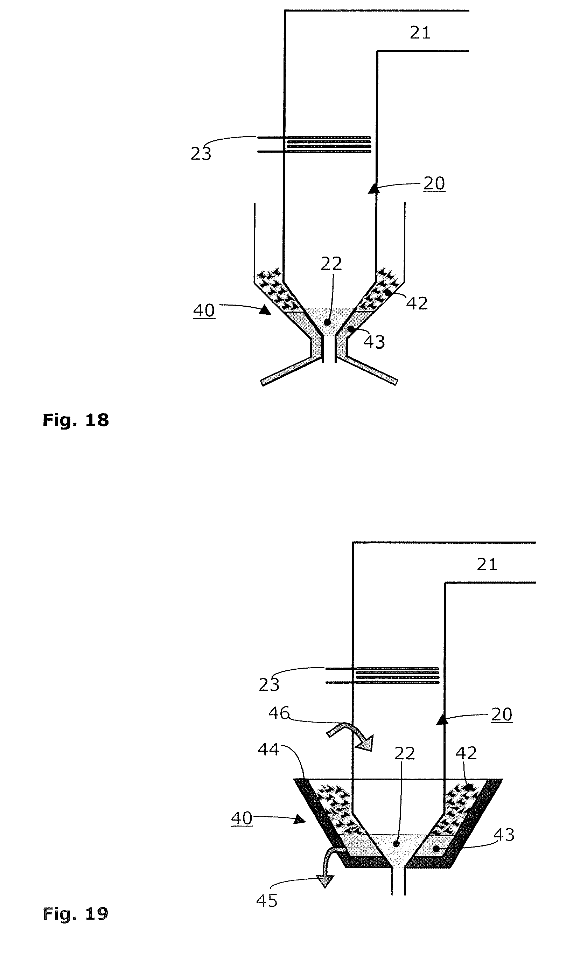

In Fig. 18 ist eine dritte Ausführungsform gezeigt. Wie in Fig. 18 zu erkennen ist, ist ein vertikal arbeitender Brennofen 20 vorgesehen. Im Brennofen 20 wird einer der Siliziumdioxid enthaltenden Ausgangsstoffe 22 durch das Verbrennen eines Primärenergielieferant (z.B. fossile Brennstoffe Öl und/oder Teer) erhitzt. Bei dieser 1. Teilreaktion der Erfindung entsteht unter anderem Silizium. Analog zum ersten Ausführungsbeispiel wird durch das Einbringen von Stickstoff Siliziumnitrid und Wärme entstehen. Diese Teilreaktion verläuft stark exotherm. Um den Ofen 20 kühlen und die 2. Teilreaktion damit kontrollieren/steuern zu können, wird in einem separaten Reaktionsbereich 40, der dem Ofen 20 mindestens teilweise umschliesst, Aluminiumoxid 42 (mit oder ohne Kryolith) als Kühlmittel eingesetzt. Das Aluminiumoxid 42 kann von oben her eingefüllt werden und verwandelt sich aufgrund der grossen Hitze, die der Ofen 20 abgibt, in flüssiges Aluminium 43, das zum Beispiel nach unten hin abfliessen kann. Diese Umwandlung (Reduktionsprozess) läuft ab, wenn im Reaktionsbereich 40 Elektroden für die (Schmelzfluss-)Elektrolyse vorgesehen sind.

Der Reaktionsbereich 40 umfasst für die (Schmelzfluss-)Elektrolyse z.B. eine Stahlwanne, die mit Kohlenstoffmaterial ausgekleidet ist. Diese Details sind nicht in Fig. 18 gezeigt. In dieser Wanne befindet sich flüssiges Elektrolyt (Aluminiumoxid mit oder ohne Kryolith). In den Elektrolyten tauchen Anoden (z.B. Kohlenstoffblöcke) ein, die an einen positiven Pol einer Spannungsquelle angeschlossen sind. Die Wanne dient als Kathode und wird am negativen Pol angeschlossen. Das in dieser 12. Teilreaktion reduzierte Aluminium (siehe untenstehende Gleichung) ist schwerer als das Elektrolyt und sammelt sich daher am dem Boden der Wanne. Von dort wird es z.B. mit einem Saugrohr abgezogen.

2Al₂O₃ → 4Al + 3O_{2.}

Der Ausgangsstoff für diese Elektrolyse (die auch als Schmelzflusselektrolyse bekannt ist) ist Bauxit, ein Gemenge aus Tonmineralien wie z.B. Aluminiumoxid und Aluminiumhydroxid (Al(OH)₃). Oft ist im Bauxit auch Siliziumdioxid vorhanden. Zunächst wird bisher typischerweise das Bauxit von den enthaltenen Eisenoxiden (z.B. mit dem Bayer-Verfahren) getrennt. Ausserdem wird dann üblicherweise das Siliziumoxid abgetrennt, welches das Bauxit "verunreinigt". Gemäss Erfindung ist es nicht zwingend notwendig diese aufwendige Trennung der Bestandteiles des Gemenges vorzunehmen, da ausreichend Energie im Prozess vorhanden ist und es nicht vorrangig um die Darstellung von reinem Aluminium geht.

Wie auch bei der bisher technisch angewendeten Aluminiumherstellung kann das Bauxit (mit oder ohne die oben genannten Bestandteile des Gemenges) mit Wasser verdünnt werden, um Aluminiumhydroxid zu erzeugen. Es kann das Bauxit aber auch mit Wasserdampf oder hyperkritischem Wasser (bei über 407°C und hohem Druck) gemischt werden, um Aluminiumhydroxid zu erzeugen.

Durch das Erhitzen des Aluminiumhydroxids auf ca. 1200 °C bis 1300 °C (z.B. mit Sekundärenergie) wird Aluminiumoxid erzeugt:

2Al(OH)₃ → Al₂O₃ + 3H₂O

Dieses Aluminiumoxid mit oder ohne Kryolith wird dann der (Schmelzfluss-) Elektrolyse unterzogen, wie beschrieben.

Durch die kontrollierte Zugabe von Bauxit und/oder Aluminiumoxid kann die Kühlwirkung verstärkt oder reduziert werden. Bei dieser Ausführungsform entsteht neben dem Produkt der 2. Teilreaktion hochwertiges Aluminium.

In einer weiteren bevorzugten Ausführungsform, die in Fig. 19 schematisch dargestellt ist, wird Aluminium 43 in flüssiger oder pulverförmiger Form dem Siliziumdioxid 22 in einem Reaktionsbereich (z.B. dem Reaktionsbereich des Ofens 20) zugegeben. Diese Zugabe von Aluminium ist in Fig. 19 durch den Pfeil 46 angedeutet. Auch bei dieser Ausführungsform wird das Aluminium in einer 12. Teilreaktion mittels der (Schmelzfluss-) Elektrolyse gewonnen, die in einem Reaktionsbereich 40 in Form einer Wanne, die mit Kohlenstoffmaterial 44 ausgekleidet ist, ausgeführt wird. In dieser Wanne bildet sich beim Anlegen eines hohen Stromes an die Anode(n) und dem als Kathode dienenden Kohlenstoffmaterial 44 Aluminium 43 aus dem Aluminiumoxid 42 (mit oder ohne Kryolith). Das Aluminium 43 setzt sich ab und kann durch ein Saugrohr nach oben hin abgezogen, oder durch ein Fallrohr 45 nach unten entnommen werden. Von diesem Entnahmepunkt aus kann das flüssige Aluminium in den Reaktionsbereich des Ofens 20 gebracht werden, um dem Siliziumdioxid den Sauerstoff zu entziehen, Vorzugsweise herrscht in dieser Phase des Prozesses eine Stickstoffatmosphäre in dem Ofen 20.

In Analogie zur bekannten Thermitreaktion (eine Redoxreaktion, bei der Aluminium als Reduktionsmittel benutzt wird, um z.B. Eisenoxid zu Eisen zu reduzieren) wird hier das Aluminium als Reduktionsmittel eingesetzt, um dem Siliziumdioxid den Sauerstoff zu entreissen. Diese Reaktion (7. Teilreaktion) läuft stark exotherm ab und liefert eine enorme Wärmemenge. Diese Wärmemenge kann wiederum in den parallel ablaufenden Prozess zur Herstellung des Aluminiums (12. Teilreaktion) eingekoppelt werden und/oder die Wärmemenge kann zur Stromerzeugung (mittels Wärmetauscher 23) verwendet werden.

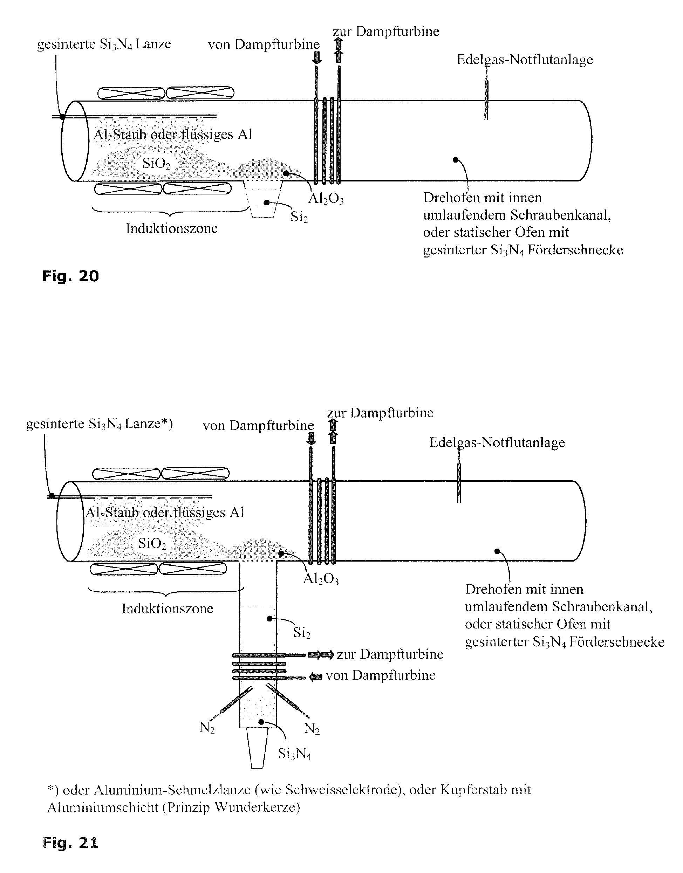

In den Figuren 20 und 21 sind zwei weitere mögliche Ausführungsformen schematisch dargestellt. In beiden Fällen kommen Öfen zum Einsatz, die horizontal oder leicht schräg gelagert sind.

Die erfindungsgemässe Energie-Materie-Kaskaden-Kopplung (EMK²) zeichnet sich dadurch aus, dass dabei Vorgänge ablaufen wie bei dissipativen Strukturen jenseits vom thermischen Gleichgewicht, wie in lebenden Strukturen von Zellen und Organismen.

Gemäss Erfindung erfolgt, statt wie bisher Verbrennungsprozesse mit Sauerstoff zu betreiben, eine Umstellung auf Stickstoffverbrennungsprozesse.

## Patentansprüche

1. Verfahren zum Bereitstellen von Energie in einem Kraftwerksprozess, mit den Schritten:
- Einbringen eines Ausgangsstoffes (22) in einen Reaktionsbereich (20), wobei der Ausgangsstoff (22) eine oder mehrere der folgenden Komponenten umfasst: Sand, siliziumdioxidhaltiges-Bauxit, Quarz, Gneis, Glimmer, Granit, Schiefer;
- Bereitstellen eines Primärenergielieferanten, um eine Reaktion zu starten, bei welcher der Ausgangsstoff (22) erhitzt und Silizium aus dem Ausgangsstoff (22) erzeugt wird;
- Einsetzen des Siliziums in einer ersten Teilreaktion, die exotherm verläuft und in der Lage ist Wärme (W2) freizusetzen;
- Einsetzen dieser Wärme (W2) als Sekundärenergie, um den Primärenergielieferanten beim Erhitzen des Ausgangsstoffs (22) zu ersetzen und/oder um mindestens eine weitere Teilreaktion oder Reihe von Teilreaktionen mit der notwendigen Energie zu versorgen, an deren Ende ein Silizium-Produkt bereitgestellt wird.

2. Verfahren nach Anspruch 1, **dadurch gekennzeichnet, dass** der Primärenergielieferant dem Ausgangsstoff (22) zugesetzt wird, oder der Ausgangsstoff (22) den Primärenergielieferant bereits umfasst.

3. Verfahren nach Anspruch 1, **dadurch gekennzeichnet, dass** ein kohlenwasserstoffhaltiger Primärenergielieferant, vorzugsweise eines oder mehrere der folgenden Substanzen Öl, Teer, Asphalt eingesetzt wird.

4. Verfahren nach Anspruch 1, 2 oder 3, **dadurch gekennzeichnet, dass** bei der ersten Teilreaktion Silizium mit Stickstoff zu Siliziumnitrid umgewandelt und dabei eine Energiemenge (W2) abgegeben wird.

5. Verfahren nach Anspruch 1, 2 oder 3, **dadurch gekennzeichnet, dass** bei der ersten Teilreaktion Silizium mit Kohlenstoff zu Siliziumcarbid umgewandelt und dabei eine Energiemenge (W2) abgegeben wird.

6. Verfahren nach Anspruch 1, 2 oder 3, **dadurch gekennzeichnet, dass** dem Ausgangsstoff (22) flüssiges oder pulverförmiges Aluminium zugeführt wird, um dem Siliziumdioxid des Ausgangsstoffs (22) den Sauerstoff zu entreissen.

7. Verfahren nach Anspruch 1, 2 oder 3, **dadurch gekennzeichnet, dass** CO₂ und flüssiges oder pulverförmiges Aluminium zugeführt wird, wobei das Aluminium zu Aluminiumoxid reduziert und dem CO₂ den Sauerstoff entreisst.

8. Verfahren nach einem oder mehreren der vorhergehenden Ansprüche, **dadurch gekennzeichnet, dass** die Teilreaktionen nacheinander oder zeitgleich ablaufen.

9. Vorrichtung zum Bereitstellen von Energie umfassend:
- einen ersten Reaktionsbereich (10; 20), zur Aufnahme mindestens eines Ausgangsstoffes (12; 22),
- Mittel zum Erhitzen des Ausgangsstoffes (22) mittels eines Primärenergielieferanten,
- einen zweiten Reaktionsbereich (20; 30), zur Aufnahme mindestens eines ersten Stoffes (22), und zur Umsetzung dieses ersten Stoffes (22) zu einem zweiten Stoff, wobei der zweite Reaktionsbereich (20; 30) thermisch mit dem ersten Reaktionsbereich (10; 20) so gekoppelt ist, dass Wärme (W2), die im ersten Reaktionsbereich (10; 20) entsteht dem zweiten Reaktionsbereich (20; 30) zuführbar ist.

10. Vorrichtung nach Anspruch 9, **dadurch gekennzeichnet, dass** der erste Reaktionsbereich (10; 20) zur Aufnahme von einem oder mehren der folgenden siliziumdioxidhaltigem Ausgangsstoffe (22):
- Sand, Gneis, Glimmer, Granit, Schiefer, Bauschutt und zur Aufnahme von einem oder mehren der folgenden Primärenergielieferanten :
Öl, Teer, Asphalt,
ausgelegt ist.

11. Vorrichtung nach Anspruch 10, **dadurch gekennzeichnet, dass** Mittel an dem ersten Reaktionsbereich (10; 20) vorgesehen sind, um Sauerstoff und oder Stickstoff zuzuführen.

12. Vorrichtung nach Anspruch 9, 10 oder 11, **dadurch gekennzeichnet, dass** eine aktive oder passive thermische Kopplung vorgesehen ist.

13. Vorrichtung nach Anspruch 9, 10 oder 11, **dadurch gekennzeichnet, dass** Mittel zum Umschalten von einer sauerstoffenthaitenden Atmosphäre auf eine stickstoffenthaltende Atmosphäre vorhanden sind.

14. Vorrichtung nach Anspruch 9, 10 oder 11, **dadurch gekennzeichnet, dass** Kühlmittel vorhanden sind, um während oder nach dem Ablaufen einer exothermen Teilreaktion mittels Zugabe von Bauxit und/oder Aluminiumoxid eine Kühlwirkung zu erzielen.

15. Vorrichtung nach Anspruch 14, **dadurch gekennzeichnet, dass** die Kühlmittel einen Aufnahmebereich, vorzugsweise eine Wanne, umfassen, der so ausgelegt und angeordnet ist, dass das Bauxit und/oder Aluminiumoxid durch Einbringen in den Aufnahmebereich dem ersten oder zweiten Reaktionsbereich (10; 20; 30) Wärme entziehen kann.

16. Vorrichtung nach Anspruch 14, **dadurch gekennzeichnet, dass** die Kühlmittel so ausgelegt und angeordnet ist, dass das Bauxit und/oder Aluminiumoxid direkt in den ersten oder zweiten Reaktionsbereich (10; 20; 30) einbringbar ist.

17. Vorrichtung nach Anspruch einem oder mehreren der Ansprüche 9 bis 16, **dadurch gekennzeichnet, dass** die Vorrichtung eine Edelgas-Notflutanlage umfasst, um in den ersten oder zweiten Reaktionsbereich (10; 20; 30) ein Edelgas einbringen zu können.
